# EUROPÄISCHE PATENTSCHRIFT

(11) **EP 1 254 813 B1**
(45) Veröffentlichungstag und Bekanntmachung des Hinweises auf die Patenterteilung: **15.10.2003**
(21) Anmeldenummer: 02090107.0
(22) Anmeldetag: 12.03.2002
(51) Int. Cl.: B60R 22/46

(54) **Antriebsbandfixierung**
Driving belt fixation
Fixation d'une bande d'entraînement

(30) Priorität: 24.04.2001 DE 10120019
(43) Veröffentlichungstag der Anmeldung: 06.11.2002
(73) Patentinhaber: TAKATA-PETRI (Ulm) GmbH, 89081 Ulm (DE)
(72) Erfinder: Maierhofer, Gunter, 89077 Ulm (DE); Klingauf, Gerhard, 88481 Balzheim (DE); Beck, Dieter, 89547 Gerstetten (DE); Löw, Katharina, 70372 Stuttgart (DE)
(74) Vertreter: Rummler, Felix Dipl. Ing.

(56) Entgegenhaltungen:
- DE-A- 19 961 109
- US-A- 5 667 161
- US-A- 5 906 328

## Beschreibung

Die Erfindung betrifft einen Antrieb für einen Gurtstraffer für Sicherheitsgurte mit einer Antriebskammer, die durch zwei parallel zueinander verlaufende und miteinander verbundene Platten gebildet ist, und mit einem Antriebsband, dessen beide Enden so an einer Antriebswelle befestigt sind, daß das Antriebsband eine Schlaufe bildet, wobei das Antriebsband durch ein innerhalb der Schlaufe aus einer Gasaustrittsöffnung austretendes, expandierendes Gas derart beaufschlagbar ist, daß sich das Antriebsband abwickelt und dabei die Antriebswelle antreibt. Derartige Antriebe für Gurtstraffer in Sicherheitsgurtsystemen in Fahrzeugen, insbesondere Kraftfahrzeugen, sind grundsätzlich bekannt (vergleiche DE 199 61 109 A).

Bei einem Unfall wird in einem derartigen Sicherheitsgurtsystem der Sicherheitsgurt gestrafft, indem einige Zentimeter des Sicherheitsgurtes auf einer Gurtaufwickelrolle aufgewickelt werden. Die Gurtaufwickelrolle sitzt auf der Antriebswelle und wird durch den Antrieb angetrieben. Damit eine nennenswerte Gurtstraffung erfolgen kann, muß die Gurtaufwickelrolle und somit auch die Antriebswelle eine signifikante Rotation erfahren. Dies ist nur möglich, wenn sich das Antriebsband um eine erhebliche Länge von der Antriebswelle abwickeln kann und diese unter Ausübung eines Drehmomentes auch antreiben kann. Das bedeutet jedoch, daß das Antriebsband eine erhebliche Länge aufweisen muß. Gleichzeitig muß aber auch ein ausreichend großer Raum vorhanden sein, in dem sich die durch das Antriebsband gebildete Schlaufe ausdehnen kann. Dieses führt dazu, daß bekannte Antriebskammern relativ groß ausgebildet sind. Resultat ist daher ein relativ hoher Platzbedarf der Sicherheitsgurtvorrichtung im Kraftfahrzeug, der mit einem erhöhten Gewicht der Sicherheitsgurtvorrichtung einhergeht.

Der Erfindung liegt die Aufgabe zugrunde, einen Antrieb für einen Gurtstraffer mit geringerem Bauraum zu schaffen.

Zur Lösung dieser Aufgabe ist ein Antrieb mit den Merkmalen des Anspruch 1 vorgesehen.

Ein erfindungsgemäßer Antrieb zeichnet sich dadurch aus, daß das Antriebsband an einer zwischen seinen Enden gelegenen Stelle durch eine Fixiervorrichtung an den Platten fixiert ist. Aufgrund dieser Ausbildung ist die Bewegung des Antriebsbandes im Falle seiner Abwicklung stark eingeschränkt. Die durch das Antriebsband gebildete Schlaufe kann sich daher bei Beaufschlagung durch das expandierende Gas nicht mehr in alle Richtungen gleichmäßig ausdehnen, sondern ist durch die Fixiervorrichtung an der Ausdehnung in zumindest eine Richtung gehindert. In der Richtung, in der die Ausdehnung der Schlaufe verhindert wird, kann die Antriebskammer kleiner dimensioniert werden und der Bauraum des Antriebs somit reduziert werden. Auf diese Weise kann nicht nur der Platzbedarf des Antriebs sondern auch das Antriebsgewicht verringert werden.

Vorteilhafte Ausführungsformen der Erfindung sind in den Unteransprüchen, der Beschreibung und den Zeichnungen beschrieben.

So kann die Fixiervorrichtung in einer ersten vorteilhaften Ausführungsform zwei feste Elemente aufweisen, um die das Antriebsband geschlungen ist. Bevorzugt beträgt der Umschlingungswinkel um jedes der beiden festen Elemente mehr als 180°.

Wird der Antrieb aktiviert, so übt das aus der Gasaustrittsöffnung austretende und expandierende Gas eine Kraft auf das Antriebsband aus. An den festen Elementen der Fixiervorrichtung werden die auf das Antriebsband wirkenden Kräfte derart umgelenkt, daß sie in entgegengesetzte Richtungen wirken und sich kompensieren. Ein Durchrutschen des Antriebsbandes durch die Fixiervorrichtung wird somit auf einfache Weise verhindert.

Als besonders vorteilhaft erweist es sich außerdem, wenn mehr als eine Umschlingung um zumindest eines der beiden festen Elemente vorgesehen ist.

In diesem Fall resultieren die durch das expandierende Gas auf das Antriebsband wirkenden Kräfte in einem Zuziehen der Umschlingungen. Das Antriebsband wird somit nicht nur durch ein gegenseitiges Kompensieren der Kräfte am Durchrutschen durch die Fixiervorrichtung gehindert sondern zusätzlich durch eine Erhöhung der Reibung des Antriebsbandes in den Umschlingungen in der Fixiervorrichtung fixiert.

In einer alternativen vorteilhaften Ausführungsform ist die Fixiervorrichtung durch zwei feste Elemente und ein bewegliches Element gebildet. Bevorzugt weisen die festen Elemente dabei einen Abstand zueinander auf, der etwas kleiner ist als die Ausdehnung des beweglichen Elementes in seinem breitesten Bereich. Besonders vorteilhaft ist es dann, wenn die Umschlingungswinkel des Antriebsbandes um die festen Elemente jeweils etwas mehr als 90° betragen und der Umschlingungswinkel um das bewegliche Element etwas mehr als 180° aufweist.

Wird in diesem Fall der Antrieb aktiviert, so führen die durch das expandierende Gas auf das Antriebsband ausgeübten Kräfte dazu, daß das bewegliche Element durch das Antriebsband in Richtung der beiden festen Elemente gezogen wird. Stößt das bewegliche Element an die beiden festen Elemente, so wird das Antriebsband zwischen dem beweglichen Element und den beiden festen Elementen eingeklemmt. Auf diese Weise wird ein Durchrutschen des Antriebsbandes verhindert und die gewünschte Fixierung des Antriebsbandes erreicht.

In einer besonders vorteilhaften baulichen Ausführungsform sind die Elemente im wesentlichen durch Bolzen gebildet, deren Endflächen an die Platten grenzen. Dadurch wird eine mechanisch einfache Fixiervorrichtung geschaffen, die eine zuverlässige Funktion gewährleistet.

Für beide Alternativen der Fixiervorrichtung gilt, daß sie sich ohne großen wirtschaftlichen Aufwand herstellen lassen und sich eventuell sogar in bereits bestehende Antriebe nachträglich leicht einbauen lassen. Ein weiterer Vorteil ist, daß bereits vorhandene Antriebsbänder verwendet werden können. Das Antriebsband wird weiterhin in seiner einstückigen Form eingesetzt. Eine aufwendige Montage eines kürzeren und eines längeren Antriebsbandabschnittes mit jeweils einem Ende an der Antriebswelle und dem entsprechend anderen Ende an der Fixiervorrichtung ist somit nicht nötig.

Nachfolgend wird die vorliegende Erfindung rein beispielhaft anhand vorteilhafter Ausführungsformen unter Bezugnahme auf die beigefügten Zeichnungen beschrieben. Es zeigen:
- Fig. 1: eine schematische Darstellung eines erfindungsgemäßen Antriebes im Ruhezustand,
- Fig. 2: eine schematische Darstellung eines erfindungsgemäßen Antriebes im aktivierten Zustand,
- Fig. 3: eine schematische Darstellung einer ersten Alternative der Fixiervorrichtung mit jeweils einer Umschlingung des Antriebsbandes,
- Fig. 4: eine schematische Darstellung der ersten Alternative der Fixiervorrichtung mit jeweils zwei Umschlingungen des Antriebsbandes, und
- Fig. 5: eine schematische Darstellung einer zweiten Alternative der Fixiervorrichtung.

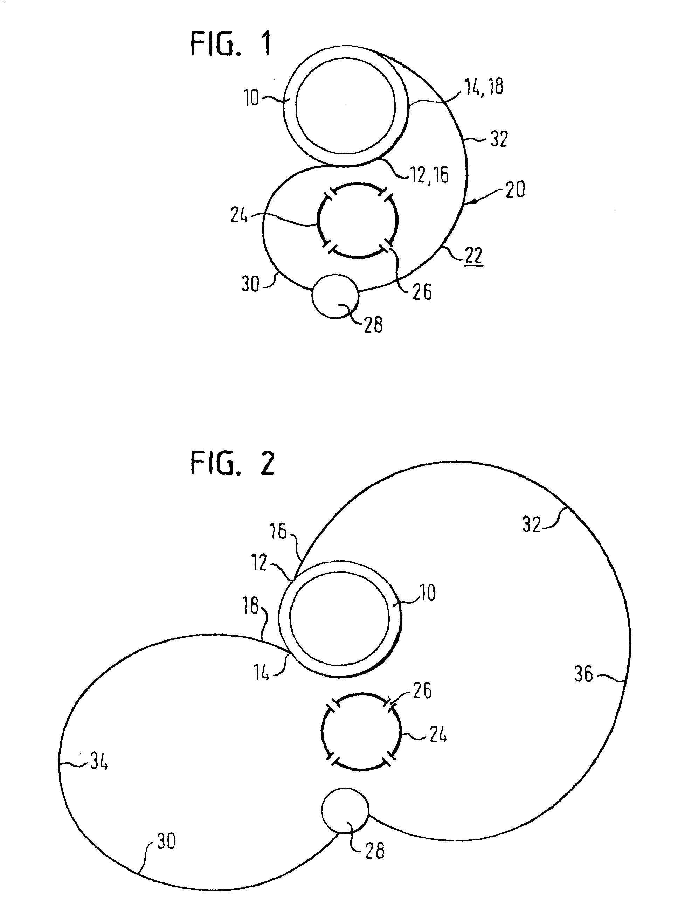

Fig. 1 zeigt den Ruhe- oder Normalzustand eines erfindungsgemäßen Antriebes für einen Gurtstraffer, der beispielsweise in einer Sicherheitsgurtvorrichtung eingesetzt werden kann, wie sie in der DE 199 61 109 A beschrieben ist, deren Inhalt hiermit auch zum Gegenstand dieser Patentanmeldung gemacht wird. Der Antrieb befindet sich in einer Antriebskammer (nicht gezeigt), die unter anderem durch zwei beabstandete und parallel zueinander angeordnete Platten (nicht gezeigt) begrenzt ist.

Gezeigt ist eine Antriebswelle 10 mit zwei Befestigungspunkten 12, 14, an denen die zwei Antriebsbandenden 16, 18 eines Antriebsbandes 20 an der Antriebswelle 10 befestigt sind. Das Antriebsband 20 bildet eine Schlaufe 22, in deren Inneren sich ein Gasgenerator 24 mit mehreren Gasaustrittsöffnungen 26 befindet, durch welche im Falle einer Aktivierung des Antriebes Gas in das Innere der Schlaufe 22 austreten kann.

Grundsätzlich ist die Position des Gasgenerators 24 innerhalb der Schlaufe 22 frei wählbar. In der hier beschriebenen Ausführungsform liegt der Gasgenerator 24 annähernd auf einer Geraden mit der Antriebswelle 10 und einer Fixiervorrichtung 28, die sich auf der der Antriebswelle 10 gegenüber gelegenen Seite des Gasgenerators 24 befindet, wobei der Abstand der Fixiervorrichtung 28 zum Gasgenerator 24 ungefähr dem Abstand zwischen Antriebswelle 10 und Gasgenerator 24 entspricht.

Die Fixiervorrichtung 28 dient zur Fixierung des Antriebsbandes 20 an den Platten der Antriebskammer und teilt den abgewickelten Teil des Antriebsbandes 20 im Ruhezustand in einen kürzeren Abschnitt 30 und einen längeren Abschnitt 32 mit einem Längenverhältnis von etwa 1:2.

Fig. 2 zeigt den erfindungsgemäßen Antrieb im aktivierten Zustand. Der Gasgenerator 24 wurde, beispielsweise bei einem Unfall, durch einen Beschleunigungssensor (nicht gezeigt) ausgelöst, so daß Gas durch die Gasaustrittsöffnungen 26 in das Innere der Schlaufe 22 austreten konnte. Die durch das Antriebsband 20 gebildete Schlaufe 22 hat sich dadurch ausgedehnt, wobei unter Abwicklung des Antriebsbandes 20 von der Antriebswelle 10 die Antriebswelle 10 angetrieben wurde.

Die Schlaufe 22 konnte sich dabei in nahezu alle Richtungen ausdehnen. Lediglich an den Befestigungspunkten 12, 14 auf der Antriebswelle 10 und an der Fixiervorrichtung 28 wurde eine Ausdehnung der Schlaufe 22 verhindert. Das Resultat ist keine kreisförmige Gestalt der ausgedehnten Schlaufe 22, sondern die Bildung einer kleineren und einer größeren annähernd kreisförmigen Teilschlaufe 34, 36, wobei die kleinere Teilschlaufe 34 durch den kürzeren Abschnitt 30 und die größere Teilschlaufe 36 durch den längeren Abschnitt 32 gebildet ist.

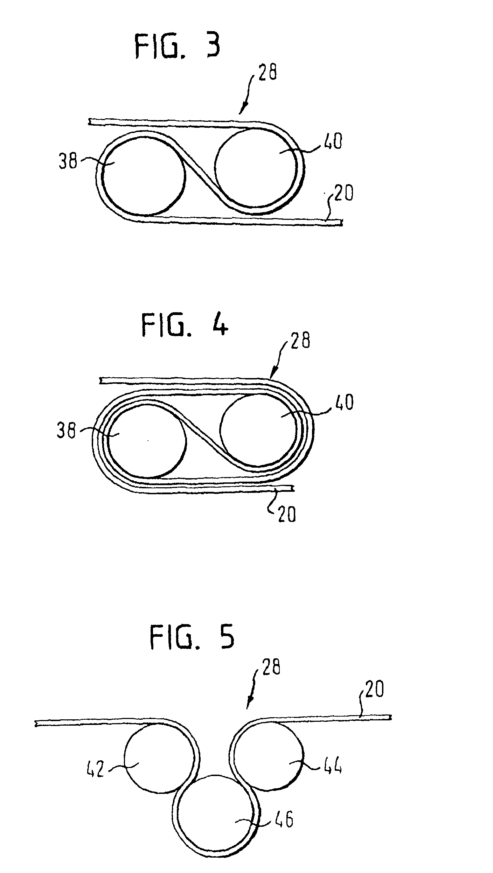

Fig. 3 zeigt die Fixiervorrichtung 28 in einer ersten Ausführungsform. Die Fixiervorrichtung 28 weist zwei feste Elemente 38, 40 auf, die durch zwei mit ihren beiden Enden fest mit den Platten der Antriebskammer verbundene und zueinander beabstandete Bolzen gebildet sind. Das Antriebsband 20 ist um jedes der beiden festen Elemente 38, 40 herum geschlungen, wobei der Umschlingungswinkel an beiden festen Elementen 38, 40 jeweils etwas mehr als 180° beträgt.

Der Durchmesser der Bolzen 38, 40 und der Abstand zwischen den Bolzen 38, 40 richten sich im wesentlichen nach dem minimal möglichen Krümmungsradius des Antriebsbandes 20 und sind so gewählt, daß das Antriebsband 20 nicht abgeknickt ist sondern eine kontinuierliche Krümmung aufweist. Der Abstand zwischen den Bolzen 38, 40 liegt ungefähr in einem Bereich zwischen 3 mm und 20 mm. Die sich zwischen den Bolzen 38, 40 ergebende lichte Weite weist ungefähr das eineinhalb- bis fünffache der Dicke des Antriebsbandes 20 auf.

Wie in Fig. 4 gezeigt, kann das Antriebsband 20 als eine Variante der ersten Ausführungsform zur Erhöhung der Reibung in der Fixiervorrichtung 28 und somit zur Verbesserung der Fixierwirkung ein weiteres Mal um jedes der festen Elemente 38, 40 herum geschlungen sein. In diesem Fall weist das Antriebsband 20 zwei zusätzliche Umschlingungen mit einem Umschlingungswinkel von im wesentlichen 180° auf.

Eine zweite Ausführungsform der erfindungsgemäßen Fixiervorrichtung 28 ist in Fig. 5 gezeigt. Sie weist zwei feste Elemente 42, 44, die durch zwei mit ihren jeweiligen Enden an den Platten der Antriebskammer befestigte Bolzen gebildet sind, und ein bewegliches Element 46 auf. Das bewegliche Element 46 ist durch einen Bolzen gebildet, der mit den Platten der Antriebskammer in gleitendem Eingriff steht.

Zur Vermeidung eines Abknickens des Antriebsbandes 20 unterschreiten die Radien der Bolzen 42-46 nicht den minimal erreichbaren Krümmungsradius des Antriebsbandes 20. Gleichzeitig ist der Durchmesser des beweglichen Bolzens 46 so gewählt, daß ein Verkippen des Bolzens 46 bei einer Verschiebung desselben ausgeschlossen ist. Die lichte Weite zwischen den beiden festen Elementen 42, 44 ist geringer als der maximale Durchmesser des beweglichen Elementes 46 gewählt.

Das Antriebsband 20 ist derart um die drei Elemente 42-46 geschlungen, daß der Umschlingungswinkel um die festen Elemente 42, 44 jeweils größer als 90° ist und der Umschlingungswinkel um das bewegliche Element 46 mehr als 180° beträgt. Übt das expandierende Gas im Falle einer Aktivierung des Gasgenerators eine Kraft auf das Antriebsband 20 aus, so äußert sich diese in der Fixiervorrichtung 28 in einem Zug an dem Antriebsband 20, der dazu führt, daß das bewegliche Element 46 in Richtung der festen Elemente 42, 44 gezogen wird und das Antriebsband 20 zwischen dem beweglichen Element 46 und den festen Elementen 42, 44 eingeklemmt wird. So ist auf einfache Weise eine effektive Fixierung des Antriebsbandes 20 in der Fixiervorrichtung 28 erreichbar.

### Bezugszeichenliste

- 10: Antriebswelle
- 12: Befestigungspunkt
- 14: Befestigungspunkt
- 16: Antriebsbandende
- 18: Antriebsbandende
- 20: Antriebsband
- 22: Schlaufe
- 24: Gasgenerator
- 26: Gasaustrittsöffnungen
- 28: Fixiervorrichtung
- 30: Abschnitt
- 32: Abschnitt
- 34: Teilschlaufe
- 36: Teilschlaufe
- 38: festes Element
- 40: festes Element
- 42: festes Element
- 44: festes Element
- 46: bewegliches Element

## Patentansprüche

1. Antrieb für einen Gurtstraffer für Sicherheitsgurte mit einer Antriebskammer, die durch zwei parallel zueinander verlaufende und miteinander verbundene Platten gebildet ist, und mit einem Antriebsband (20), dessen beide Enden (16, 18) so an einer Antriebswelle (10) befestigt sind, daß das Antriebsband (20) eine Schlaufe (22) bildet, wobei das Antriebsband (20) durch ein innerhalb der Schlaufe (22) aus einer Gasaustrittsöffnung (26) austretendes, expandierendes Gas derart beaufschlagbar ist, daß sich das Antriebsband (20) abwickelt und dabei die Antriebswelle (10) antreibt,
**dadurch gekennzeichnet,**
**daß** das Antriebsband (20) an einer zwischen seinen Enden (16, 18) gelegenen Stelle durch eine Fixiervorrichtung (28) an den Platten fixiert ist.

2. Antrieb nach Anspruch 1,
**dadurch gekennzeichnet,**
**daß** die Fixiervorrichtung (28) zwei feste Elemente (38, 40) aufweist, um die das Antriebsband (20) geschlungen ist.

3. Antrieb nach Anspruch 2,
**dadurch gekennzeichnet,**
**daß** der Umschlingungswinkel um jedes der beiden festen Elemente (38, 40) mehr als 180° beträgt.

4. Antrieb nach Anspruch 2,
**dadurch gekennzeichnet,**
**daß** mehr als eine Umschlingung um zumindest eines der beiden festen Elemente (38, 40) vorgesehen ist.

5. Antrieb nach einem der Ansprüche 2 bis 4,
**dadurch gekennzeichnet,**
**daß** das Antriebsband (20) um jedes der beiden festen Elemente (38, 40) eine erste Umschlingung mit einem Umschlingungswinkel von etwas mehr als 180° und zusätzlich eine zweite Umschlingung mit einem Umschlingungswinkel von im wesentlichen 180° aufweist.

6. Antrieb nach einem der Ansprüche 2 bis 5,
**dadurch gekennzeichnet,**
**daß** die festen Elemente (38, 40) eine lichte Weite aufweisen, die ungefähr im Bereich des Eineinhalb- bis Fünffachen der Dicke des Antriebsbandes (20) liegt.

7. Antrieb nach Anspruch 1,
**dadurch gekennzeichnet,**
**daß** die Fixiervorrichtung (28) durch zwei feste Elemente (42, 44) und ein bewegliches Element (46) gebildet ist.

8. Antrieb nach Anspruch 7,
**dadurch gekennzeichnet,**
**daß** die festen Elemente (42, 44) einen Abstand zueinander aufweisen, der etwas kleiner ist, als die Ausdehnung des beweglichen Elementes (46) in seinem breitesten Bereich.

9. Antrieb nach Anspruch 8,
**dadurch gekennzeichnet,**
**daß** der Umschlingungswinkel des Antriebsbandes (20) um die festen Elemente (42, 44) etwas mehr als 90° und der Umschlingungswinkel um das bewegliche Element (46) etwas mehr als 180° aufweist.

10. Antrieb nach einem der vorherigen Ansprüche,
**dadurch gekennzeichnet,**
**daß** die Elemente (38-46) im wesentlichen durch Bolzen gebildet sind, deren Endflächen an die Platten grenzen.

11. Antrieb nach einem der vorherigen Ansprüche,
**dadurch gekennzeichnet,**
**daß** die Fixiervorrichtung (28) den abgewickelten Teil des Antriebsbandes (20) im Ruhezustand in zwei Abschnitte (30, 32) mit einem Längenverhältnis von ungefähr 1:2 teilt.

## Claims

1. Drive for a belt tautener for safety belts, with a drive chamber which is formed by two interconnected plates running parallel to one another, and with a drive band (20), the two ends (16, 18) of which are fastened to a drive shaft (10) in such a way that the drive band (20) forms a loop (22), the drive band (20) being capable of being acted upon by an expanding gas emerging from a gas outlet orifice (26) within the loop (22), in such a way that the drive band (20) unwinds and at the same time drives the drive shaft (10), **characterized in that** the drive band (20) is fixed to the plates, at a point located between its ends (16, 18), by means of a fixing device (28).

2. Drive according to Claim 1, **characterized in that** the fixing device (28) has two fixed elements (38, 40), around which the drive band (20) is looped.

3. Drive according to Claim 2, **characterized in that** the looping angle around each of the two fixed elements (38, 40) is more than 180°.

4. Drive according to Claim 2, **characterized in that** more than one looping around at least one of the two fixed elements (38, 40) is provided.

5. Drive according to one of Claims 2 to 4, **characterized in that** the drive band (20) has around each of the two fixed elements (38, 40) a first looping with a looping angle of somewhat more than 180° and additionally a second looping with a looping angle of essentially 180°.

6. Drive according to one of Claims 2 to 5, **characterized in that** the fixed elements (38, 40) have a clear width which lies approximately in the region of one and a half to five times the thickness of the drive band (20).

7. Drive according to Claim 1, **characterized in that** the fixing device (28) is formed by two fixed elements (42, 44) and one moveable element (46).

8. Drive according to Claim 7, **characterized in that** the fixed elements (42, 44) are at a distance from one another which is somewhat smaller than the extent of the moveable element (46) in its widest region.

9. Drive according to Claim 8, **characterized in that** the looping angle of the drive band (20) around the fixed elements (42, 44) is somewhat more than 90° and the looping angle around the moveable element (46) is somewhat more than 180°.

10. Drive according to one of the preceding claims, **characterized in that** the elements (38-46) are formed essentially by bolts, the end faces of which are adjacent to the plates.

11. Drive according to one of the preceding claims, **characterized in that**, in the state of rest, the fixing device (28) divides the unwound part of the drive band (20) into two portions (30, 32) having a length ratio of approximately 1:2.

## Revendications

1. Entraînement pour un tendeur de sangle pour des ceintures de sécurité avec une chambre d'entraînement, qui est formée par deux plaques agencées de façon parallèle et reliées entre elles, et avec une bande d'entraînement (20), dont les deux extrémités (16, 18) sont fixées sur un arbre d'entraînement (10) de telle sorte que la bande d'entraînement (20) forme une boucle (22), la bande d'entraînement (20) pouvant être sollicitée par un gaz expansif et sortant à l'intérieur de la boucle (22) d'une ouverture de sortie de gaz (26) de telle sorte que la bande d'entraînement (20) se déroule et entraîne alors l'arbre d'entraînement (10),
**caractérisé en ce que**
la bande d'entraînement est fixée en un endroit situé entre ses extrémités (16, 18) par un dispositif de fixation (28) sur les plaques.

2. Entraînement selon la revendication 1,
**caractérisé en ce que**
le dispositif de fixation (28) présente deux éléments (38, 40) fixes, autour desquels la bande d'entraînement (20) est enroulée.

3. Entraînement selon la revendication 2,
**caractérisé en ce que**
l'angle d'enroulement autour de chacun des deux éléments fixes (38, 40) est de plus de 180°.

4. Entraînement selon la revendication 2,
**caractérisé en ce que**
il est prévu plus d'un enroulement autour d'au moins l'un des deux éléments (38, 40) fixes.

5. Entraînement selon l'une quelconque des revendications 2 à 4
**caractérisé en ce que**
la bande d'entraînement (20) présente autour de chacun des deux éléments (38, 40) fixes un premier enroulement avec un angle d'enroulement d'un peu plus de 180° et en supplément un deuxième enroulement avec un angle d'enroulement de sensiblement 180°.

6. Entraînement selon l'une quelconque des revendications 2 à 5,
**caractérisé en ce que**
les éléments (38, 40) fixes présentent une largeur intérieure qui représente à peu près une fois et demie à cinq fois l'épaisseur de la bande d'entraînement (20).

7. Entraînement selon la revendication 1,
**caractérisé en ce que**
le dispositif de fixation (28) est formé par deux éléments (42, 44) fixes et un élément (46) mobile.

8. Entraînement selon la revendication 7,
**caractérisé en ce que**
les éléments (42, 44) fixes présentent entre eux un espacement qui est légèrement inférieur à la dimension de l'élément mobile (46) dans sa zone la plus large.

9. Entraînement selon la revendication 8,
**caractérisé en ce que**
l'angle d'enroulement de la bande d'entraînement (20) autour des éléments fixes (42, 44) est d'un peu plus de 90° et l'angle d'enroulement autour de l'élément (46) mobile est d'un peu plus de 180°.

10. Entraînement selon l'une quelconque des revendications précédentes,
**caractérisé en ce que**
les éléments (38-46) sont constitués essentiellement par des boulons dont les surfaces d'extrémité sont contiguës aux plaques.

11. Entraînement selon l'une quelconque des revendications précédentes,
**caractérisé en ce que**
le dispositif de fixation (28) divise la partie déroulée de la bande d'entraînement (20) dans l'état de repos en deux parties (30, 32) avec un rapport de longueur d'environ 1/2.
